Europäisches Patentamt

European Patent Office

Office européen des brevets

(11) Publication number: 0 330 072
A2

# EUROPEAN PATENT APPLICATION

(21) Application number: 89102646.0

(51) Int. Cl.4: B01D 13/04 , C08J 9/28

(22) Date of filing: 16.02.89

(30) Priority: 26.02.88 IT 1956888

(43) Date of publication of application:
30.08.89 Bulletin 89/35

(84) Designated Contracting States:
DE FR IT NL

(71) Applicant: SEPAREM S.p.A.
Via per Oropa 118
I-13051 Biella (Vercelli)(IT)

(72) Inventor: Drioli, Enrico
153, Via A. Falcone
I-80127 Napoli(IT)
Inventor: Gaeta, Soccorso
8, Via Repubblica
I-13055 Occhieppo Inferiore (Vercelli)(IT)
Inventor: Sogliano, Marco
11, Vicolo Galeazzo
I-13051 Biella (Vercelli)(IT)

(74) Representative: Garrone, Fernando
Internazionale Brevetti s.r.l. Via Brentano 2
I-20121 Milano(IT)

(54) Semipermeable membrane for separating fluids, process for preparing and using the membrane for microfiltration, distillation and special fabrics.

(57) The present invention relates to a semipermeable membrane for separating fluids, comprising hydrophobic PVDF. The membrane is asymmetrical and is prepared with a succession of steps comprising:
    a) preparing a solution comprising PVDF and an organic solvent;
    b) treating this solution to form a preformed membrane;
    c) evaporating at least part of the solvent contained in the preformed membrane;
    d) gelifying the preformed membrane in a coagulation bath;
    e) washing the preformed membrane to extract the solvent.

EP 0 330 072 A2

## SEMIPERMEABLE MEMBRANE FOR SEPARATING FLUIDS, PROCESS FOR PREPARING AND USING THE MEMBRANE FOR MICROFILTRATION, DISTILLATION AND SPECIAL FABRICS.

The present invention relates to a semipermeable membrane for separating fluids. More in particular, the present invention relates to a membrane adapted for use in microfiltration processes and also for being used, as an alternative, in membrane distillation processes and/or in special applications concerning the use of membranes in the production of fabrics which can be permeated by vaporphase chemical species but not by liquid-phase ones.

The present invention furthermore relates to the process for preparing said membrane. In particular, a process in which a polymeric solution is placed in contact with a liquid system which is not a solvent for the polymer but can be mixed with the solvent of the polymer. After immersing the polymeric mixture in a coagulation bath, the solvent is extracted by the non-solvent, which diffuses in the freshly formed upper layer of the membrane. The process continues, and the non-solvent penetrates by diffusion through the denser layer which has formed until it reaches the substrate where the composition changes continuously, finally reaching a critical value at which de-mixing into two liquid phases occurs: one phase being rich in polymer and forming the structure of the porous layer by means of a gelification process, the other phase being predominantly constituted by solvent and non-solvent, producing the cavities defined in the inner structure of the membrane.

More in particular, the field of the present invention relates to semipermeable membranes made of PVDF (polyvinylidene fluoride) and of mixtures of PVDF and other polymers.

The above is summarily the main field of industrial use of the invention; said field however does not constitute a limitation of the invention's scope, since the membrane and the process according to the invention, in particular as described and claimed hereinafter, can be advantageously used in any other equivalent field in which a semipermeable membrane is used to allow the selective passage of vapors and to block the passage of liquids, in particular water or aqueous liquid-phase solutions.

Membranes made for example of teflon or polypropylene are known, wherein their particular type of porosity is obtained by stretching the film which forms them so as to obtain a microporous surface which has been found to be usable in membrane distillation processes and in special applications such as its use in manufacturing fabrics which can be permeated by vapor-phase chemical species but not by liquid-phase ones. These known membranes, however, have some disadvantages; in particular their preparation process is rather complicated and the membranes thus obtained are difficult to couple to their supporting fabric, since both teflon and polypropylene are notoriously anti-adhesive materials which entail problems of difficult solution in forming a stable bond with their supporting fabric. The stretching step which allows to form the pores within these materials furthermore weakens their structural resistance. The porosity of said known membranes is furthermore rather limited.

PVDF membranes are furthermore known, such as for example those disclosed in the European patent No. 50864 filed on October 27, 1980, in the US patent No. 3615024 filed on August 26, 1968, in the US patent No. 4316772 filed on February 14, 1979. These documents generally teach the use of PVDF membranes adapted for use in microfiltration or reverse osmosis processes, and all these membranes are made of hydrophilic PVDF. The term "hydrophilic PVDF" describes PVDF modified with hydrophilic groups, such as for example sulphonated groups, which allow the water forming the solution to be treated by reverse osmosis to penetrate the body of the membrane while remaining in the liquid phase, since said body is made of hydrophilic material. This kind of membrane is therefore usable only in microfiltration, ultrafiltration and reverse osmosis processes. Said known PVDF membranes are furthermore very sensitive both to aggressive chemicals and to high temperatures and can therefore be used only in bland conditions and are anyway sensitive to variations in said conditions.

The aim of the present invention is therefore to eliminate the above described disadvantages by providing a semipermeable membrane providing optimum functionality in membrane distillation and in its application to fabrics to allow the passage of vapor-phase chemical species but not of liquid-phase ones, maintaining however a limited cost and using a particularly simple production process.

A further object of the invention is to provide membranes with increased porosity in order to obtain greater operating efficiency and lighter membranes.

This aim, this object and others are achieved, according to the invention, by a semipermeable membrane for separating fluids, characterized in that it comprises hydrophobic PVDF and in that it is asymmetrical.

The term "hydrophobic PVDF" defines PVDF having time-constant highly hydrophobic characteristics. In other words, the membrane in hydrophobic PVDF according to the invention does not allow liquid-phase water to penetrate in the pores provided in it, though it allows vapor-phase water to pass.

The term "asymmetrical" describes a membrane which is asymmetrical in a transverse direction along its thickness. In other words, an asymmetrical semipermeable membrane according to the invention has one side with a particular density and porosity and an opposite side having a substantially different density and porosity.

According to a preferred embodiment of the invention, the membrane is substantially made of hydrophobic PVDF, and is more preferably made of substantially pure hydrophobic PVDF. The membrane has an average porosity, measured gravimetrically measured at 100° C, higher than 50% and preferably higher than 80%.

The pores of the membrane according to the invention preferably have an average diameter comprised between 0.01 and 1 micron and more preferably comprised between 0.1 and 0.3 microns.

The thickness of the membrane is comprised between 50 and 250 microns and preferably comprised between 70 and 120 microns.

These values adapt the membrane for both microfiltration processes and membrane distillation processes. The term "membrane distillation" describes a process based on the use of hydrophobic microporous membranes. When a hydrophobic microporous membrane is placed between two aqueous solutions at different temperatures, the solution can be separated into some of its components. The force involved is the vapor tension difference between the liquids at the two solution-membrane interfaces. The water vapor is conveyed through the pores of the membrane from the higher-temperature side to the lower-temperature side, where it condenses. The selectivity of the process is linked to the fact that it is not possible for the liquid phase to cross the hydrophobic barrier.

According to the preferred form of use of the membrane according to the invention, which is highly hydrophobic, has high microporosity, low thermal conductivity and good chemical and thermal resistance, the membrane is used in preparing special fabrics to be used in clothing, said fabrics being characterized by extremely light weight. The hydrophobic properties of the membrane allow to transport the vapor-phase chemical species through the fabric (high transpiration), preventing instead the penetration of liquid-phase water (high impermeability).

The membrane according to the invention is produced according to a process characterized in that it comprises the following steps:

a) preparing a solution comprising PVDF and an organic solvent;

b) treating said solution to form a preformed membrane;

c) evaporating at least part of the solvent contained in said preformed membrane;

d) gelifying said preformed membrane in a coagulation bath;

e) washing said preformed membrane.

According to a preferred embodiment, the process furthermore comprises a further thermal treatment step f). Said thermal treatment is preferably performed for a time comprised between 10 and 100 minutes at a temperature comprised between 70 and 100° C.

In practice it has been observed that when the membranes according to the invention are used in microfiltration processes the thermal treatment produces a considerable increase in the flow with respect to thermally untreated membranes; reference should be made to Table 3 on the subject.

According to a first embodiment of the process, the treatment for forming said preformed membrane comprises the application of the solution prepared during step a) on a support so as to form a planar film. This first embodiment is particularly suitable to produce membranes to be coupled to fabrics to obtain the above described transpiration effect associated with impermeability.

According to a second embodiment, the treatment for forming the preformed membrane comprises the extrusion of the solution to form capillary fibers. This second embodiment is particularly suitable for using the membrane in microfiltration and membrane distillation processes. .

The step a) of preparing the solution of PVDF and organic solvent is preferably performed at a temperature comprised between 35° C and 100° C and more preferably comprised between 40° C and 70° C. In this preparation, the preferred organic solvent comprises dimethylformamide (DMF) with the possible addition of polyvinylpyrrolidone (PVP). In this manner it is possible to control the characteristics of the membrane.

The PVDF concentration is preferably comprised between 5 and 30% by weight on the total of the solution. The PVP concentration is preferably comprised between 0 and 10% by weight on the total of the solution. Before step b), the solution is furthermore preferably degassed and filtered, so as to eliminate any impurities and gas bubbles contained in it.

According to a preferred embodiment, the relative molecular mass of the additive employed allows to control the porosity of the membrane. In particular, when the additive being used is polyvinylpyrrolidone (PVP) the relative molecular mass of the PVP can vary from 10,000 to 2,000,000 and preferably from 10,000 to 400,000.

If the membrane according to the invention is used in combination with a fabric to obtain the transpiration and impermeabilization effect, the solution prepared in step a) is applied on a fiber support preferably having a weight comprised between 50 and 100 grams per square meter. More preferably, said support has a corded weave and not a plain one. In fact it has been observed that corded weave makes the solution adhere better to the membrane, providing an optimum coupling.

The speed of said application of the solution on the support is preferably comprised between 1 and 10 meters/min.

During the solvent evaporation step c) the humidity in the evaporation region is preferably comprised between 50% and 80% and more preferably between 60% and 70%.

The conditions of the evaporation region are controlled for example by means of a box through which the applied film passes continuously. The temperature and the speed of the air flowing on the membrane being formed are also among said controlled conditions. The passage time determines the solvent evaporation time (SET) and can assume values comprised between 10 sec and 300 sec. The temperature of the air flowing over the polymeric film during the solvent evaporation step is preferably comprised between $20°$ C and $30°$ C.

The preformed membrane is subsequently introduced in the coagulation bath for a permanence time of more than 10 minutes. The liquid contained in the coagulation bath comprises a liquid which is non-solvent for the preformed membrane. The contact between the preformed membrane and the liquid of the coagulation bath causes the preformed membrane to gelify. The non-solvent is generally distilled water at a temperature comprised between $10°$ C and $20°$ C and having a conductivity comprised between 10 and 30 microsiemens/cm.

The subsequent washing eliminates all traces of the solvent contained in the preformed membrane and completely extracts the additive still present; this washing is preferably performed when the membrane exits from the coagulation tank. Water is caused to flow on both the membrane side and the support side for a few hours at a temperature of at least $18°$ C. The membrane thus prepared is ready to be used.

The present invention will become apparent from the following detailed description of some examples of preparation, given merely by way of non-limitative example of the invention. In all the examples, the viscosity is measured with a Hakesw2 viscosimeter at a temperature of $20°$ C and at a speed of 27 rpm.

EXAMPLE 1 according to the invention

Preparation of a membrane having a cutoff equal to 100,000, suitable for microfiltration.

In order to obtain a supported membrane with a flow of more than 100 lt/h/sq.m and a rejection (to dextranes with molecular weight of 100,000) of more than 90%, the following procedure is carried out. 154 g of DMF are fed into a mixer immersed in a bath at a temperature of $40°$ C and allowed to reach a stable temperature, then 40 g of PVDF polymer are slowly added with 6 g of PVP having a molecular weight of 10,000. The prepared solution, having a viscosity of 11,850 cpoises is allowed to degas in a heated environment ($50°$ C) and then filtered by means of a gauze with a 10-50 micron mesh. The solution is then applied by means of a film-laying apparatus on a non-woven fabric or on a mirror or again on a planar surface which does not react with the solvent employed. The solution is applied at a speed of 3 m/min at $20°$ C and with a relative humidity of 55% with a set thickness of 150 microns. A film is thus obtained which is immersed in a bath containing demineralized water at the temperature of $10°$ C. The solvent evaporation time is equal to 30 sec. The membrane, after remaining in the coagulation bath for 10 minutes, is subsequently placed in a tank with continuously recirculating water for approximately one hour. Four samples are extracted from the piece of membrane thus obtained and are characterized with an aqueous solution containing an amount of dextranes (with a molecular weight of 110,000) equal to 0.01% of the total amount of the fed substances. The operating pressure is 1.5 atm at a temperature of $25°$ C and a tangential feed flow rate of 300 l/h. A sample of fed substance and the four samples of permeate are periodically extracted and are subsequently analyzed by spectrophotometry; the characterization data listed in Table 1 are thus obtained.

Table 1.

| Flow and dextrane-110,000 rejection values of the membranes prepared according to Example 1. | | | |
|---|---|---|---|
| Membrane no. | Flow 1/h/sq.m | Dextrane rejection % | Processing hours |
| 5 IPS 21 | 124 | 94 | 8 |
| 5 IPS 57 | 106 | 96 | 8 |
| 5 IPS 16 | 107 | 94 | 8 |
| 5 IPS 88 | 108 | 96 | 8 |

Example 2 according to the invention

Preparation of a membrane with a cut-off of 500,000.

Following the method previously used to obtain a membrane with a cutoff of 100,000, a new polymeric solution is prepared having a viscosity of 14,400 cpoises by feeding 154 g of DMF solvent in a flask and by successively adding 40 g of PVDF polymer 2012/0000 and 6 g of PVP with a relative molecular mass of 44,000.

After preparing, filtering and applying a membrane in conditions similar to those of Example 1, the membrane thus formed is characterized with dextranes with a molecular weight of 500,000. Table 2 lists the related data.

Table 2.

| Flow and dextrane-500,000 rejection values of the membranes prepared according to Example 2. | | | |
|---|---|---|---|
| Membrane no. | Flow 1/h/sq.m | Dextrane rejection % | Processing hours |
| 3 IPS 6 | 97 | 92% | 6.5 |
| 3 IPS 6 | 190 | 95% | 7.5 |
| 3 IPS 8 | 90 | 95% | 7.5 |
| 3 IPS 10 | 190 | 95% | 5.0 |

A thermal treatment is performed on the membranes arriving from the type 3 IPS application. Four samples are extracted, two whereof being thermally treated while two are left unchanged as reference. The thermal treatment consists in immersing the membranes in an aqueous bath at the temperature of 80° C for a period of 2 minutes. After this treatment the four samples are characterized and the results are listed in Table 3.

5

### Table 3.

| Flow values of thermally treated membranes. | | |
|---|---|---|
| Membrane no. | Initial flow | Processing hours |
| 1 NO | 261 | 0.5 |
| 1 YES | 404 | 0.5 |
| 2 NO | 255 | 0.5 |
| 2 YES | 404 | 0.5 |

Example 3 (for comparison)

Preparation of a membrane for clothing applied on a fabric in natural fiber.

A polymeric solution with a viscosity of 4000 cpoises is prepared using PVDF polymer and DMF as a solvent without adding any additive. 40 g of polymer are fed into a flask, and 60 g of DMF are successively added. After a mixing period performed in an environment heated at 40°C, the solution is allowed to degas, then it is filtered with a gauze having a 10-30 micron mesh. The film is applied by extrusion on a support formed by a fabric in natural fiber (100% cotton). A membrane having a set thickness of 150 microns, with a solvent evaporation time of 30 sec, coagulated in an aqueous bath at the temperature of 14oC, is prepared at the environmental temperature of 18°C and a relative humidity of 60%. No post-treatment is performed on the finished product, but it can be seen during the washing step that the fabric has been imbibed by the solution, forming a very rigid product in which the solution forms a single body by entering both in the weave of the fabric and inside the fiber. From this example it can be deduced that the characteristics of the fabric are essential for obtaining good membranes.

Example 4 according to the invention

Preparation of a membrane for clothing applied on a synthetic-fiber fabric.

A solution is prepared according to Example 3.
After the filtration and degassing steps, said solution is applied on a support formed by a polyamide fabric (100% nylon). The thickness of the applied film is 150 microns, the evaporation time is 60 sec, and the temperature of the coagulation bath (in demineralized water) is 14°C. After the washing step, the membrane is characterized as follows:

Visual characterization

By perfectly adhering to the fabric, the membrane forms a uniform composite body in which the membrane is on the reverse side of the fabric; the texture is soft.

Physical characterization

The fabric and the film are completely airproof while allowing a transpirability for water vapor of 4,400 g $H_2O$/sq.m/24h. The sample subjected to an impermeability test withstands a water pressure of 10 meters. The minimum limit in order to be considered impermeable to water is 2 meters. The membrane thus obtained is excellent for all those textile applications which require waterproof and airproof characteristics and transpirability to water vapor.

Example 5

Preparation of membranes for membrane distillation processes.

A solution is prepared as previously described by mixing DMF, PVP (relative molecular mass of 44,000) and PVDF in percentages of 80%, 5% and 15% by weight respectively. The solution is left to agitate at 60°C for 3 hours. The membrane is prepared as in the previous examples and then thermally treated at 60°C for 45 minutes. The membrane thus prepared is characterized by the following values:

|  | Not thermally treated | Thermally treated |
|---|---|---|
| Bubble point in atm<br>Average pore radius in cm | 0.53<br>$2.54 \times 10^{-4}$ | 0.58<br>$2.83 \times 10^{-4}$ |
| Flow, 1/h/sq.m (in water): |  |  |
| - at 0.2 atm<br>- 1.0 atm | 40<br>200 | 150<br>--- |

The following results were obtained in membrane distillation tests in these conditions:

| Δ T*<br>(°C) | Flow<br>(kg/sq.m<br>sec) | Rejection % (0.5 mol/l NaCl) |
|---|---|---|
| 25<br>5 | $19 \times 10^{-4}$<br>$2 \times 10^{-4}$ | 100<br>100 |

*Δ T = T (hot side) - T (cold side)

Example 6

Tests were conducted to check the resistance of the membrane according to the invention to high operating temperatures.

Results of high-temperature tests.

The tests were performed by exposing the membranes obtained according to examples 1, 2, 4 and 5 to water vapor at 120°C for 120 hours, subsequently characterizing them in standard conditions (T = 25°C, P = bar, c = 0.01% by weight of dextranes with a relative molecular mass of 70,000 daltons).
The results are listed hereafter:

| membrane | flow<br>(kg/h/sq.m) | Rejection % |
|---|---|---|
| SP 29A | 32 | 94 |
| SP 29B | 32 | 94 |
| SP 29C | 32 | 94 |
| SP 29D | 32 | 94 |

These results show that the membrane is capable of withstanding high temperatures, maintaining its flow and rejection characteristics.

Example 7

The membrane obtained according to example 1, 2, 4, 5 and 6 is tested as to its mechanical resistance with an Instron 1122 under the following test conditions:

| Traction speed: | 100 mm/min |
|---|---|
| Sample length: | 150 mm |
| Sample width: | 15 mm |
| Distance of clamps: | 100 mm |
| Temperature: | 25 °C |

The obtained results are indicated hereafter:

| Membrane | Breaking load (newton) | Elongation % |
|---|---|---|
| SP 29/A | 151 | 22 |
| SP 29/B | 151 | 22 |
| SP 29/C | 121 | 39 |
| SP 29/D | 120 | 39 |

## Claims

1. Semipermeable membrane for separating fluids, characterized in that it comprises hydrophobic PVDF and in that it is asymmetrical.

2. Membrane according to claim 1, characterized in that it is made of substantially pure hydrophobic PVDF and in that it has an average porosity higher than 50% and preferably higher than 80%.

3. Membrane according to claim 1, characterized in that its thickness is comprised between 50 and 250 microns and preferably comprised between 70 and 120 microns.

4. Membrane according to claim 1, characterized in that it has pores with an average diameter of 0.01 to 1 micron, preferably of 0.1 to 0.3 microns.

5. Membrane according to claim 1, characterized in that it used in membrane distillation and/or microfiltration processes.

6. Membrane according to claim 1, characterized in that it is used in combination with fabrics to produce barriers permeable to vapor and impermeable to water.

7. Process for preparing a membrane according to claim 1, characterized in that it comprises the following steps:

    a) preparing a solution comprising PVDF and an organic solvent;

    b) treating said solution to form a preformed membrane;

    c) evaporating at least part of the solvent contained in said preformed membrane;

    d) gelifying said preformed membrane in a coagulation bath;

    e) washing said preformed membrane to extract the solvent.

8. Process according to claim 7, characterized in that it comprises a further thermal treatment step f).

9. Process according to claim 7, characterized in that said treatment for forming said preformed membrane comprises the application of said solution on a support so as to form a planar film.

10. Process according to claim 7, characterized in that said treatment for forming said preformed membrane comprises the extrusion of said solution to form capillary fibers.

11. Process according to claim 7, characterized in that the preparation of said solution of PVDF and organic solvent is performed at a temperature comprised between 35 °C and 110 °C and preferably comprised between 40 °C and 70 °C.

12. Process according to claim 7, characterized in that said organic solvent comprises DMF preferably with the addition of PVP so as to control the transport characteristics of the membrane.

13. Process according to claim 13, characterized in that the PVDF concentration is comprised between 5 and 30% by weight.

14. Process according to claim 13, characterized in that the PVP concentration is comprised between 0 and 10% by weight.

15. Process according to claim 7, characterized in that said solution is completely degassed and filtered before said step b).

16. Process according to claim 9, characterized in that said solution is applied on a fiber support having a weight comprised between 50 and 100 g per square meter.

17. Process according to claim 16, characterized in that said support has a rib weave and not a plain one.

18. Process according to claim 9, characterized in that the speed of said application is comprised between 1 and 10 m/min.

19. Process according to claim 7, characterized in that the humidity in the evaporation region is comprised between 50 and 80% and preferably between 60 and 70% during said solvent evaporation step c).

20. Process according to claim 7, characterized in that said washing step e) entails a complete extraction of the solvent from said preformed membrane.

21. Process according to claim 8, characterized in that said thermal treatment is performed for a time comprised between 10 and 100 minutes at a temperature comprised between $70^\circ$ C and $100^\circ$ C.

22. Use of the membrane according to any one of the preceding claims in membrane distillation processes.

23. Use of the membrane according to any one of the preceding claims, characterized in that it allows to prepare hydrophobic water-repellent fabrics permeable to gases and vapors.

24. Semipermeable membrane for separating fluids comprising hydrophobic PVDF according to what is described.

25. Process for preparing a semipermeable membrane for separating fluids comprising PVDF according to what is described.